# EUROPÄISCHE PATENTANMELDUNG

(11) **EP 2 014 508 A2**
(43) Veröffentlichungstag der Anmeldung: **14.01.2009**
(21) Anmeldenummer: 08010553.9
(22) Anmeldetag: 11.06.2008
(51) Int. Cl.: B60N 3/10

(54) **Ablagefach und Halter für einen Getränkebehälter**

(30) Priorität: 11.07.2007 DE 102007032205
(71) Anmelder: fischer automotive systems GmbH & Co. KG, 72160 Horb (DE)
(72) Erfinder: Schaal, Falk, 72275 Alpirsbach (DE)

(57) **Zusammenfassung**

Die Erfindung betrifft ein Ablagefach (1) und einen Halter (5) für einen Getränkebehälter (6) für einen Kraftwagen. Die Erfindung schlägt vor, das Ablagefach (1) in Draufsicht in Form zweier sich schneidender Kreise auszubilden und in einen der beiden Kreise einen Fachteiler (3) drehbar einzusetzen, der zylinderrohrförmig ist und eine Ausnehmung (4) an einer Umfangsstelle aufweist. Durch Drehen des Fachteilers (3) lässt sich die Größe des Halters (5) für einen Getränkebehälter (6) im Ablagefach (1) ändern. Durch Entnehmen des Fachteilers (3) lässt sich das Ablagefach (1) in seiner gesamten Größe nutzen. Außerdem lässt sich der Fachteiler (3) gegen andere Fachteiler wechseln.

## Beschreibung

Die Erfindung betrifft ein Ablagefach und Halter für einen Getränkebehälter mit den Merkmalen des Oberbegriffs des Anspruchs 1.

Das Ablagefach und Halter ist zum Einbau in einen Kraftwagen oder auch ein sonstiges Land-, Luft- oder Wasserfahrzeug vorgesehen. Getränkebehälter sind beispielsweise eine Getränkedose, ein Becher, eine Tasse oder eine Flasche.

Die Patentanmeldung JP-A-09104278 offenbart einen Halter für zwei Getränkebehälter, der die Form einer in Draufsicht rechteckigen, oben offenen Schachtel aufweist. In der Mitte einer Längsseitenwand ist ein Fachteiler um eine gedachte vertikale Achse drehbar gelagert. Begriffe wie "oben" und "vertikal" beziehen sich auf eine vorgesehene Einbau-und Gebrauchslage des Halters. Der Fachteiler hat die Form einer horizontal angeordneten Scheibe, die aus einem größeren und einem kleineren Halbkreis zusammengesetzt ist. Die den Fachteiler bildende Scheibe ist in einem Schlitz in der Längsseitenwand des schachtelförmigen Halters angeordnet. Durch Drehen lässt sich der kleine oder der große Halbkreis in den schachtelförmigen Halter hineinschwenken, der jeweils andere Halbkreis befindet sich außerhalb des Halters. Auch sind zwei Drehstellungen möglich, in denen jeweils ein Viertel des großen und des kleinen Halbkreises in den schachtelförmigen Halter ragen. In den unterschiedlichen Drehstellungen ragt der Fachteiler unterschiedlich weit in den Halter hinein und lässt unterschiedlich viel Freiraum zwischen sich und den beiden jeweils schräg gegenüberliegenden Ecken, in die jeweils ein Getränkebehälter einstellbar ist. Durch die verschiedenen Drehstellungen des Fachteilers lassen sich zwei verschiedene Größen einstellen und der Halter an Getränkebehälter verschiedenen Durchmessers anpassen.

Aufgabe der Erfindung ist ein Ablagefach und Halter für einen Getränkebehälter mit einem Fachteiler vorzuschlagen, der konstruktiv anders aufgebaut ist und eine Nutzung des gesamten Ablagefachs als Ablagefach ermöglicht.

Diese Aufgabe wird erfindungsgemäß durch die Merkmale des Anspruchs 1 gelöst. Das erfindungsgemäße Ablagefach weist insbesondere eine längliche Form auf, in Draufsicht ist es beispielsweise oval oder hat die Form zweier sich schneidender Kreise. Auch beispielsweise eine Rechteckform ist möglich. Ein Bereich des Ablagefachs, insbesondere ein kreisförmiger oder quadratischer Endbereich des Ablagefachs, bildet den Halter für einen Getränkebehälter, der zum übrigen Teil des Ablagefachs hin durch einen drehbaren Fachteiler abgegrenzt und zum Halter vervollständigt ist. Eine Wand des Ablagefachs und der Fachteiler umschließen einen eingestellten Getränkebehälter, wobei die Umschließung ohne Unterbrechung sein oder eine oder mehrere Unterbrechungen aufweisen kann. In einer Drehstellung ragt der Fachteiler in den Bereich des Ablagefachs hinein, der den Halter bildet, wodurch der Halter einem Getränkebehälter mit kleinerem Durchmesser angepasst ist. In einer anderen Drehstellung ragt der Fachteiler nicht oder weniger weit in den Bereich des Ablagefachs hinein, der den Halter bildet. Der Halter ist dadurch an Getränkebehälter mit größerem Durchmesser angepasst. Erfindungsgemäß ist der Fachteiler aus dem Ablagefach entnehmbar, so dass das Ablagefach als Ganzes zum Einlegen von Gegenständen zur Verfügung steht. Außer der Verwendung des Ablagefachs in seiner gesamten Größe hat die Entnehmbarkeit des Fachteilers den Vorteil, dass er mit einem oder mehreren anderen Fachteilern gewechselt werden kann. Dadurch sind die Verwendungsmöglichkeiten vergrößert.

Eine Ausgestaltung der Erfindung sieht eine im Wesentlichen vertikale Drehachse des Fachteilers vor. Der Fachteiler kann eine zylindrische Mantelfläche aufweisen, wobei unter zylindrisch auch Abweichungen in Richtung einer spitzen Kegelstumpfform zu verstehen sind. Eine Drehlagerung ist dadurch in einfacher Weise möglich.

Eine Ausgestaltung der Erfindung sieht vor, dass der Fachteiler in etwa gleich hoch wie das Ablagefach ist, also ein voluminöser Körper oder Hohlkörper und nicht einfach eine Scheibe.

Eine Ausgestaltung der Erfindung sieht vor, dass das Ablagefach einen teilzylinderförmigen Wandabschnitt aufweist, der den Bereich des Ablagefachs zumindest teilweise umschließt, der den Halter bildet. Die Teilzylinderschalenform ist angepasst an die Form von Getränkebehältern, die größtenteils zylindrisch sind oder allgemeiner ausgedrückt, einen kreisförmigen Querschnitt aufweisen. Auch hier ist eine Winkelabweichung der Teilzylinderschalenform zu einer Kegelstumpfschalenform möglich, es kommt nicht auf eine exakte Zylinderform an.

Eine Ausgestaltung der Erfindung sieht mindestens eine Ausnehmung im Umfang des Fachteilers vor. Wird der Fachteiler so gedreht, dass die Ausnehmung dem Bereich des Ablagefachs zugewandt ist, der den Halter für den Getränkebehälter bildet, ist der Halter zum Einstellen eines Getränkebehälters mit großem Durchmesser geeignet. Wird die Ausnehmung des Fachteilers von dem Bereich des Ablagefachs weggedreht, der den Halter bildet, ist der Querschnitt des Halters verkleinert und der Halter zum Einstellen eines Getränkebehälters mit kleinerem Durchmesser geeignet. Gemäß, einer Weiterbildung weist der Fachteiler mehrere unterschiedlich große Ausnehmungen in seinem Umfang auf, wodurch eine Anpassung an mehr unterschiedliche Durchmesser von Getränkebehältern möglich ist.

Eine Ausgestaltung der Erfindung sieht vor, dass sich ein Abstand einer Umfangswand des Fachteilers von einer Drehachse des Fachteilers in Umfangsrichtung des Fachteilers ändert. Die Umfangswand kann zylindrisch oder nicht-zylindrisch sein, jedenfalls weist sie eine exzentrische Drehachse auf. Mit dieser Ausgestaltung der Erfindung lässt sich die Größe des Halters durch Drehen des Fachteilers in einem begrenzten Bereich stufenlos ändern und dadurch der Halter an unterschiedliche Durchmesser von Getränkebehältern anpassen.

Eine Ausgestaltung der Erfindung sieht vor, dass der Fachteiler auf einem Umfangsabschnitt oder jedenfalls auf einem Abschnitt Nuten zum Einschieben plattenförmiger Gegenstände aufweist. Beispielsweise lassen sich CD-Hüllen oder auch CDs in die Nuten schieben. Das Ablagefach ist dadurch als Halter für plattenförmige Gegenstände wie CD-Hüllen oder CDs verwendbar.

Die Erfindung wird nachfolgend anhand eines in der Zeichnung dargestellten Ausführungsbeispiels näher erläutert. Es zeigen:
- Figuren 1 und 2: ein Ablagefach und Halter für einen Getränkebehälter gemäß der Erfindung in perspektivischer Darstellung in zwei unterschiedlichen Stellungen;
- Figuren 3-14: das Ablagefach und Halter für einen Getränkebehälter aus Figuren 1 und 2 in Draufsicht mit verschiedenen Fachteilern in unterschiedlichen Stellungen gemäß der Erfindung.

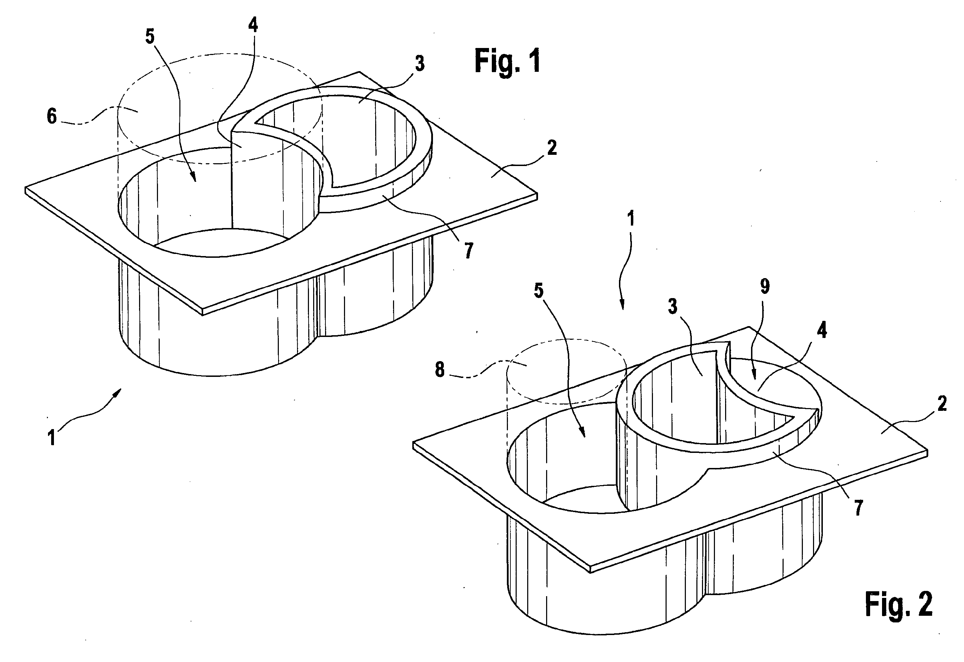

Das in Figuren 1 und 2 gezeigte erfindungsgemäße Ablagefach 1 weist eine topfförmige Vertiefung auf, die in Draufsicht die Form zweier sich schneidender Kreise hat. Ein oberer Rand des Ablagefachs 1 steht als Einbaublende 2 nach außen ab und hat einen rechteckigen Umriss. In einem der beiden Kreise oder besser gesagt Zylinder des Ablagefachs 1 befindet sich ein Fachteiler 3, der die Form eines Hohlzylinders mit einer konkaven, ebenfalls zylinderförmige Ausnehmung 4 in einem Umfangsabschnitt aufweist. Die Ausnehmung 4 bildet eine zylinderförmige Wölbung einer im Übrigen zylinderförmigen Umfangswand des Fachteilers 3 nach innen. Ist, wie in Figur 1, die Ausnehmung 4 des Fachteilers 3 dem nicht vom Fachteiler 3 eingenommenen zylindrischen Bereich des Ablagefachs 1 zugewandt, vervollständigt die Ausnehmung 4 im Umfang des Fachteilers 3 den nicht vom Fachteiler 3 eingenommenen Bereich des Ablagefachs 1 zu einem Hohlzylinder. Der nicht vom Fachteiler 3 eingenommene Bereich des Ablagefachs 1 bildet einen Halter 5 zum Einstellen eines Getränkebehälters 6, der in der Zeichnung als durchsichtiger Zylinder mit Strich-Zweipunkt-Linien veranschaulicht ist. Der Getränkebehälter 6 kann beispielsweise eine Getränkedose, ein Becher, eine Tasse oder eine Flasche sein.

Der Fachteiler 3 ist hohl und bildet dadurch ein Ablagefach. Er kann einen Boden aufweisen oder an seiner Unterseite offen sein. Der Fachteiler 3 ist etwas höher als das Ablagefach 1 tief ist, so dass er oben vorsteht und an seinen überstehenden Rand 7 gegriffen werden kann. Der Fachteiler 3 ist im Ablagefach 1 drehbar, wenn der Getränkebehälter 6 entnommen ist. Wie in Figur 2 zu sehen, lässt sich die Ausnehmung 4 im Umfang des Fachteilers 3 von dem Bereich des Ablagefachs 1 weg drehen, der den Halter 5 zum Einstellen eines Getränkebehälters bildet. In dieser Drehstellung des Fachteilers 3 ragt die zylindrische Umfangswand des Fachteilers 3 ein Stück weit in den Bereich des Ablagefachs 1 hinein, der den Halter 5 für einen Getränkebehälter bildet. Dadurch verkleinert der Fachteiler 3 den Halter 5 zum Einstellen eines Getränkebehälters 8 mit kleinerem Durchmesser, wie es in Figur 2 zu sehen ist. Der hohle Fachteiler 3 ist unverändert als Ablagefach nutzbar, außerdem bildet ein in Draufsicht linsenförmiger Bereich des Ablagefachs 1, der zwischen der Ausnehmung 4 des Fachteilers 3 und einer Umfangswand des Ablagefachs 1 eingeschlossen ist, ein weiteres Ablagefach 9. Der Fachteiler 3 ist aus dem Ablagefach 1 entnehmbar, wodurch das Ablagefach 1 in seiner vollen Größe als Ablagefach 1 nutzbar ist (nicht dargestellt).

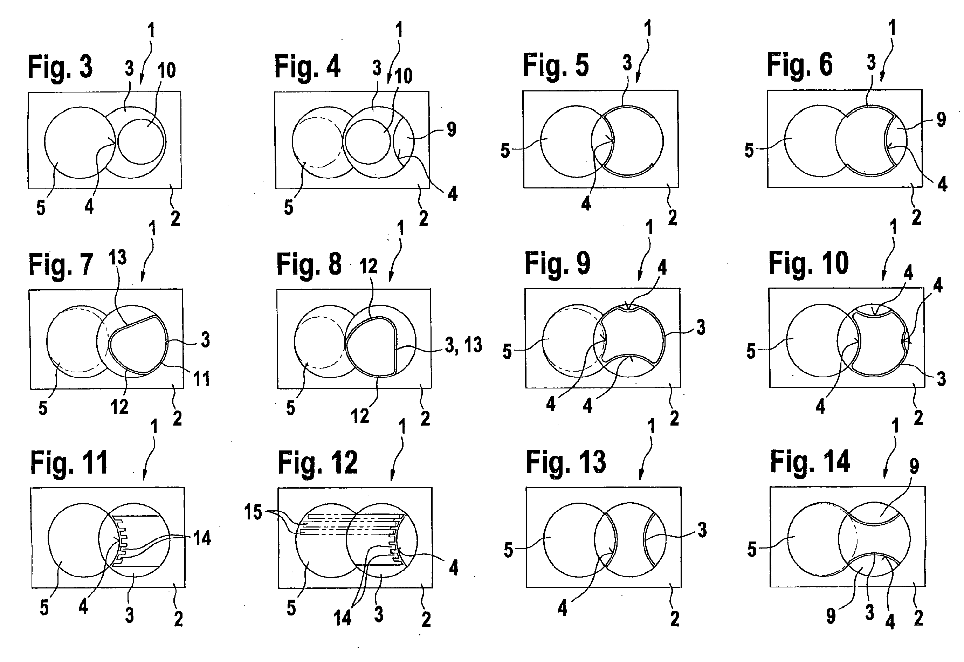

Durch die Entnehmbarkeit ist der Fachteiler 3 wechselbar. In Figuren 3 und 4 ist ein Fachteiler 3 in das Ablagefach 1 eingesetzt, der eine zylindrische Vertiefung aufweist, die einen zweiten Halter 10 für einen Getränkebehälter bildet. Ansonsten ist der Fachteiler 3 aus Figuren 3 und 4 gleich ausgebildet wie der Fachteiler 3 aus Figuren 1 und 2. Der Fachteiler 3 aus Figuren 3 und 4 weist einen zylindrischen Umfang mit einer Ausnehmung 4 an einer Stelle des Umfangs auf. Er ist drehbar, so dass sich der freie Querschnitt des Bereichs des Ablagefachs 1, der den Halter 5 für einen Getränkebehälter bildet, größer oder kleiner einstellen lässt, wie es zu Figuren 1 und 2 erläutert worden ist.

Im Unterschied zu Figuren 1 und 2 ist der Fachteiler 3 in Figuren 5 und 6 auf einer der Ausnehmung 4 gegenüberliegenden Seite des Umfangs offen. Wird, wie in Figur 6 zu sehen, die offene Umfangsstelle des Fachteilers 3 dem Bereich des Ablagefachs 1 zugedreht, der den Halter 5 für einen Getränkebehälter bildet, ist das Ablagefach 1 um den Innenraum des Fachteilers 3 vergrößert. Zwischen der Ausnehmung 4 des Fachteilers 3 und einer Umfangswand des Ablagefachs 1 steht das zusätzliche, in Draufsicht linsenförmige Ablagefach 9 zur Verfügung.

In Figuren 7 und 8 weist die Umfangswand des Fachteilers 3 einen zylinderförmigen Abschnitt 11 auf, an den sich an einer Seite ein spiralförmig verlaufender Wandabschnitt 12 anschließt, dessen Abstand von einer gedachten Mittelachse des Fachteilers 3 sich verringert. Verbunden werden der zylindrische Abschnitt 11 und der spiralförmig verlaufende Abschnitt 12 durch einen geraden Abschnitt 13, der in einer Sehnenrichtung verläuft. Durch Drehung des Fachteilers 3 lässt sich die Größe des Bereichs des Ablagefachs 1, der den Halter 5 für einen Getränkebehälter bildet, in Grenzen stufenlos einstellen, wie es aus Figuren 7 und 8 ersichtlich ist.

In Figuren 9 und 10 weist der Fachteiler 3 drei Ausnehmungen 4 unterschiedlicher Größe in seinem Umfang auf. Durch Drehen des Fachteilers 3 lässt sich wahlweise eine der drei Ausnehmungen 4 dem Bereich des Ablagefachs 1, das den Halter 5 für einen Getränkebehälter bildet, zudrehen. Die Größe des den Halter 5 für einen Getränkebehälter bildenden Bereichs des Ablagefachs 1 lässt sich dadurch in Stufen einstellen.

In Figuren 11 und 12 ist der Fachteiler 3 auf einer der Ausnehmung 4 gegenüberliegenden Seite offen. Auf einer Innenseite der Ausnehmung 4 weist der Fachteiler 3 Nuten 14 auf, in die plattenförmige Gegenstände wie beispielsweise CD-Hüllen oder CDs schiebbar sind. Ist wie in Figur 12 zu sehen die Ausnehmung 4 des Fachteilers 3 dem Bereich des Ablagefachs 1 abgewandt, der den Halter 5 für einen Getränkebehälter bildet, können plattenförmige Gegenstände, beispielsweise wie in Figur 12 mit Strich-Zweipunkt-Linien dargestellt, CD-Hüllen 15 in das Ablagefach 1 und die Nuten 14 geschoben werden. Das Ablagefach 1 ist dadurch als CD-Halter verwendbar. Wird der Fachteiler 3 gedreht, so dass die Ausnehmung 4 dem Bereich des Ablagefachs 1 zugewandt ist, der den Halter 5 für einen Getränkebehälter bildet, kann ein Getränkebehälter eingestellt werden. Außerdem ist der Innenbereich des Fachteilers 3 als Ablagefach nutzbar.

In Figuren 13 und 14 weist der Fachteiler 3 lediglich zwei einander gegenüberliegende, konkave zylinderförmige Wandabschnitte auf, die zwei Ausnehmungen 4 bilden. In der in Figur 13 dargestellten Drehstellung des Fachteilers 3 ist der Bereich des Ablagefachs 1, der den Halter 5 zum Einstellen eines Getränkebehälters bildet, als Halter 5 nutzbar. Der übrige Bereich des Ablagefachs 1 ist in zwei kleinere Ablagefächer unterteilt. Wird der Fachteiler 3 wie in Figur 14 zu sehen um 90° gedreht, ergibt sich ein langes Ablagefach und seitlich zwei kleine, in Draufsicht linsenförmige Ablagefächer 9.

## Patentansprüche

1. Ablagefach und Halter für einen Getränkebehälter, wobei ein Bereich des Ablagefachs (1) den Halter (5) bildet, mit einem Fachteiler (3), der drehbar in dem Ablagefach (1) gelagert ist und der in einer Drehstellung in den Bereich des Ablagefachs (1) hineinragt, der den Halter (5) bildet, und der in einer anderen Drehstellung nicht oder weniger weit in den Bereich des Ablagefachs (1) hineinragt, der den Halter (5) bildet, **dadurch gekennzeichnet, dass** der Fachteiler (3) aus dem Ablagefach (1) entnehmbar ist.

2. Ablagefach und Halter für einen Getränkebehälter nach Anspruch 1, **dadurch gekennzeichnet, dass** der Fachteiler (3) um eine im Wesentlichen vertikale Drehachse drehbar ist.

3. Ablagefach und Halter für einen Getränkebehälter nach Anspruch 1, **dadurch gekennzeichnet, dass** der Fachteiler (3) eine zylindrische Mantelfläche aufweist.

4. Ablagefach und Halter für einen Getränkebehälter nach Anspruch 1, **dadurch gekennzeichnet, dass** der Fachteiler (3) in etwa gleich hoch wie das Ablagefach (1) ist.

5. Ablagefach und Halter für einen Getränkebehälter nach Anspruch 1, **dadurch gekennzeichnet, dass** das Ablagefach (1) einen teilzylinderschalenförmigen Wandabschnitt aufweist.

6. Ablagefach und Halter für einen Getränkebehälter nach Anspruch 1, **dadurch gekennzeichnet, dass** der Fachteiler (3) mindestens eine Ausnehmung (4) in seinem Umfang aufweist.

7. Ablagefach und Halter für einen Getränkebehälter nach Anspruch 1, **dadurch gekennzeichnet, dass** ein Abstand einer Umfangswand des Fachteilers (3) von einer Drehachse des Fachteilers (3) sich in Umfangsrichtung ändert.

8. Ablagefach und Halter für einen Getränkebehälter nach Anspruch 1, **dadurch gekennzeichnet, dass** der Fachteiler (3) ein Ablagefach oder einen Halter (10) für einen Getränkebehälter aufweist.

9. Ablagefach und Halter für einen Getränkebehälter nach Anspruch 1, **dadurch gekennzeichnet, dass** der Fachteiler (3) auf einem Umfangsabschnitt Nuten (14) zum Einschieben plattenförmiger Gegenstände (15) aufweist.
